# EUROPÄISCHE PATENTANMELDUNG

(11) **EP 4 524 906 A1**
(43) Veröffentlichungstag der Anmeldung: **19.03.2025**
(21) Anmeldenummer: 24190223.8
(22) Anmeldetag: 23.07.2024
(51) Int. Cl.: G06V 20/10, G06V 20/56

(54) **SELBSTFAHRENDE LANDWIRTSCHAFTLICHE ARBEITSMASCHINE MIT BILDBASIERTER REGELUNG**

(30) Priorität: 14.09.2023 DE 102023124856
(71) Anmelder: CLAAS Selbstfahrende Erntemaschinen GmbH, 33428 Harsewinkel (DE)
(72) Erfinder: Bormann, Bastian, 33334 Gütersloh (DE); Thiesmann, Waldemar, 49080 Osnabrück (DE); Bussmann, Christoph, 33428 Harsewinkel (DE); Korthals, Timo, 33818 Leopoldshöhe (DE); Neitemeier, Dennis, 59510 Lippetal (DE); Wilken, Andreas, 49143 Bissendorf (DE); Heufekes, Maik, 48147 Münster (DE); Töniges, Torben, 33602 Bielefeld (DE)
(74) Vertreter: CLAAS Gruppe

(57) **Zusammenfassung**

Die vorliegende Erfindung betrifft eine selbstfahrende landwirtschaftliche Arbeitsmaschine (1) mit Arbeitsaggregaten (8) zum Aufnehmen, Bearbeiten und Weiterleiten von Erntegut (3) eines Pflanzenbestandes (2) eines landwirtschaftlichen Feldes (35) und mit einem Antriebsmotor (6) zum Antrieb der Arbeitsaggregate (8) und zum Vortrieb der selbstfahrenden landwirtschaftlichen Arbeitsmaschine (1) mit einer Fahrgeschwindigkeit entlang des landwirtschaftlichen Feldes (35) und mit einer Kameravorrichtung (21) zur Erfassung eines digitalen Bildes (21a) des Pflanzenbestandes (2) des landwirtschaftlichen Feldes (35) in einer Umgebung der selbstfahrenden landwirtschaftlichen Arbeitsmaschine (1).

Die vorliegende Erfindung beruht auf dem allgemeinen Gedanken, dass im digitalen Bild (21a) der vorhandene Anteil des Ernteguts (3) ermittelt wird, um hierauf basierend die selbstfahrende landwirtschaftlichen Arbeitsmaschine (1) optimal einzustellen.

## Beschreibung

Die vorliegende Erfindung betrifft eine selbstfahrende landwirtschaftliche Arbeitsmaschine mit Arbeitsaggregaten zum Aufnehmen, Bearbeiten und Weiterleiten von Erntegut eines Pflanzenbestandes eines landwirtschaftlichen Feldes und mit einem Antriebsmotor zum Antrieb dieser Arbeitsaggregate und zum Vortrieb der selbstfahrenden landwirtschaftlichen Arbeitsmaschine mit einer Fahrgeschwindigkeit entlang des landwirtschaftlichen Feldes. Diese selbstfahrende landwirtschaftliche Arbeitsmaschine weist zusätzlich eine Kameravorrichtung auf, um den in einer Umgebung der selbstfahrenden landwirtschaftlichen Arbeitsmaschine den Pflanzenbestandes des landwirtschaftlichen Feldes in Form eines digitalen Bildes zu erfassen.

Die EP 3 991 539 A1 offenbart einen elektronischen Datenprozessor, der so konfiguriert ist, dass dieser Komponentenpixel einer erntefähigen Pflanzenkomponente innerhalb der erhaltenen Bilddaten entsprechende Pflanzenpixel einer oder mehreren Zielpflanzen identifiziert. Ein Rand, eine Grenze oder ein Umriss der Komponentenpixel wird bestimmt. Der Datenprozessor ist so konfiguriert, dass er eine Größe der erntefähigen Pflanzenkomponente auf der Grundlage der ermittelten Kante, Grenze oder des Umrisses der identifizierten Komponentenpixel erkennt. Eine Benutzerschnittstelle ist so konfiguriert, dass sie auf der Grundlage einer erfassten Größe der erntefähigen Pflanzenkomponente für die eine oder mehrere Zielpflanzen einen Gesamtertrag, einen Teilertrag oder einen Ertrag pro Reihe als Indikator für den Ertrag der einen oder mehreren Pflanzen oder der stehenden Ernte auf dem Feld bereitstellt.

Zwar kann so ein Indikator für einen Fahrer der selbstfahrenden landwirtschaftlichen Arbeitsmaschine als interessant und/oder wichtig angesehen werden, jedoch hilft dieses Anzeigen des Indikators auf der Benutzerschnittstelle insbesondere unerfahrenen Fahrern oder erfahrenen Fahren in neuen, unbekannten Situationen nicht derart, dass der Fahrer einfach und sicher erkennt, wie ein gewünschter Ertrag erzielt werden kann.

Der vorliegenden Erfindung liegt die Aufgabe zugrunde, eine verbesserte Ausführungsform einer selbstfahrenden landwirtschaftlichen Arbeitsmaschine anzugeben, die einen Fahrer der selbstfahrenden landwirtschaftlichen Arbeitsmaschine entlastet und gleichzeitig das Erreichen eines optimalen Ertrags ermöglicht.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass im digitalen Bild der vorhandene Anteil des Ernteguts ermittelt wird, um hierauf basierend die selbstfahrende landwirtschaftlichen Arbeitsmaschine optimal einzustellen. Hierdurch wird eine kamerabildbasierte Regelung der selbstfahrenden landwirtschaftlichen Arbeitsmaschine ermöglicht.

Die erfindungsgemäße selbstfahrende landwirtschaftliche Arbeitsmaschine kann als selbstfahrender Feldhäcksler oder als selbstfahrender Mähdrescher für den landwirtschaftlichen Einsatz auf einem landwirtschaftlichen Feld ausgebildet sein.

Die selbstfahrende landwirtschaftliche Arbeitsmaschine weist mehrere Arbeitsaggregate zum Aufnehmen, Bearbeiten und Weiterleiten von Erntegut eines Pflanzenbestandes des landwirtschaftlichen Feldes auf. Ein solches Arbeitsaggregat kann ein an die Arbeitsmaschine anbringbares Vorsatzgerät, ein Schrägförderer der Arbeitsmaschine, eine Dreschvorrichtung der Arbeitsmaschine, eine Abscheidevorrichtung der Arbeitsmaschine, eine Reinigungsvorrichtung der Arbeitsmaschine, ein Kornelevator der Arbeitsmaschine, eine Überkehrschnecke der Arbeitsmaschine, eine Korntankentleervorrichtung der Arbeitsmaschine, ein Nachbeschleuniger der Arbeitsmaschine, eine Kornschnecke und/oder eine Korntankschnecke sein.

Die selbstfahrende landwirtschaftliche Arbeitsmaschine weist einen Antriebsmotor, insbesondere einen Elektromotor und/oder einen Dieselmotor, zum Antrieb der Arbeitsaggregate und zum Vortrieb der selbstfahrenden landwirtschaftlichen Arbeitsmaschine mit einer Fahrgeschwindigkeit mit einer Fahrtrichtung entlang des landwirtschaftlichen Feldes auf. Zwischen dem Antriebsmotor und jedem Arbeitsaggregat kann jeweils eine einstellbare Kopplung ausgebildet sein. Unter einer Kopplung kann eine mechanische, eine elektrische, eine pneumatische und/oder eine hydraulische Kopplung zwischen dem Antriebsmotor und einem Arbeitsaggregat verstanden werden, wobei die Kopplung dazu ausgebildet ist, dass ausgehend vom Antriebsmotor über die Kopplung ein Antrieb des gekoppelten Arbeitsaggregates ermöglicht wird. Eine einstellbare Kopplung kann derart ausgebildet sein, dass eine dem gekoppelten Arbeitsaggregat über die Kopplung vom Antriebsmotor übertragene Leistung einstellbar ist. Eine Kopplung kann mittels wenigstens einer Kopplungsvorrichtung oder mehreren Kopplungsvorrichtungen, insbesondere wenigstens einer Getriebevorrichtung, ausgebildet sein, die zwischen dem Antriebsmotor und Arbeitsaggregat jeweils eine Koppelung ermöglicht.

Die selbstfahrende landwirtschaftliche Arbeitsmaschine weist eine Kameravorrichtung zur Erfassung eines digitalen Bildes des Pflanzenbestandes des landwirtschaftlichen Feldes in einer Umgebung der selbstfahrenden landwirtschaftlichen Arbeitsmaschine auf. Die Kameravorrichtung kann frontseitig an der selbstfahrenden landwirtschaftlichen Arbeitsmaschine, insbesondere frontseitig an einer Fahrerkabine der selbstfahrenden landwirtschaftlichen Arbeitsmaschine, angeordnet sein. Die Kameravorrichtung kann eine Monokamera und/oder eine Stereokamera aufweisen. Die Kameravorrichtung kann dazu vorgesehene und ausgebildet sein, für den Menschen sichtbares Licht, Licht im nahen Infrarot, Infrarotlicht und/oder ultraviolettes Licht für die Erstellung des digitalen Bildes zu erfassen. Das mittels der Kameravorrichtung erfasste und/oder erzeugte digitale Bild kann Bilddaten, insbesondere mit Pixeln, aufweisen.

Die selbstfahrende landwirtschaftliche Arbeitsmaschine weist eine Einstellvorrichtung auf, die dazu vorgesehen und eingerichtet, insbesondere ausgebildet und/oder programmiert, ist, mittels des digitalen Bildes der Kameravorrichtung einen im Pflanzenbestand vorhandenen Anteil des Ernteguts zu ermitteln und basierend auf diesem ermittelten Anteil des vorhandenen Ernteguts wenigstens ein Arbeitsaggregat und/oder die Fahrgeschwindigkeit der selbstfahrenden landwirtschaftlichen Arbeitsmaschine einzustellen.

Die Einstellvorrichtung kann als Steuer- und/oder Regelvorrichtung ausgebildet sein, die eine Einstellung durch eine Steuerung und/oder Regelung der landwirtschaftlichen Arbeitsmaschine, insbesondere von Komponenten, insbesondere Arbeitsaggregat, der landwirtschaftlichen Arbeitsmaschine, bewirkt. Die Einstellvorrichtung kann eine Rechenvorrichtung und einen Datenspeicher aufweisen.

Die Einstellvorrichtung kann dazu vorgesehen und eingerichtet, insbesondere ausgebildet und/oder programmiert, sein, Komponentenpixel einer erntefähigen Pflanzenkomponenten, insbesondere des Ernteguts, innerhalb der erhaltenen Bilddaten des digitalen Bildes entsprechende Pflanzenpixel einer oder mehreren Zielpflanzen zu identifizieren. Hierbei kann die Einstellvorrichtung dazu vorgesehen und eingerichtet, insbesondere ausgebildet und/oder programmiert, sein, einen Rand, eine Grenze und/oder einen Umriss der Komponentenpixel der erntefähigen Pflanzenkomponente, insbesondere des Ernteguts, zu bestimmen. Die Einstellvorrichtung kann dazu vorgesehen und eingerichtet, insbesondere ausgebildet und/oder programmiert, sein, einen Anteil und/oder eine Größe der erntefähigen Pflanzenkomponente, insbesondere des Ernteguts, auf der Grundlage der ermittelten Kante, Grenze oder des Umrisses der identifizierten Komponentenpixel zu ermitteln.

Der vorhandene Anteil des Ernteguts im digitalen Bild der Kameravorrichtung kann die Anzahl der Pixel betreffen, die das Erntegut darstellen, im Verhältnis zur gesamten Anzahl der Pixel des digitalen Bild.

Der vorhandene Anteil des Ernteguts im digitalen Bild der Kameravorrichtung kann die Anzahl und/oder Abmessungen und/oder Flächen von Bildbereichen des digitalen Bildes betreffen, die das Erntegut darstellen, im Verhältnis zur gesamten Bildflächengröße des digitalen Bildes.

Durch die erfindungsgemäße Auswertung und dazugehörige einstellungstechnische Verwendung des digitalen Bildes der Kameravorrichtung werden unerfahrene Fahrer oder erfahrenen Fahren in neuen, unbekannten Situationen u.a. aktiv dahingehend unterstützt, dass gewünschter Ertrag erzielt bzw. sichergestellt wird.

Bei einer vorteilhaften Weiterbildung der erfindungsgemäßen Lösung ist vorgesehen, dass die Einstellvorrichtung dazu vorgesehen und eingerichtet, insbesondere ausgebildet und/oder programmiert, ist, in unterschiedlichen Bereichen des digitalen Bildes jeweils den im Pflanzenbestand dieses Bereiches vorhandenen Anteil des Ernteguts zu ermitteln und die Einstellung des wenigstens einen Arbeitsaggregats und/oder der Fahrgeschwindigkeit der selbstfahrenden landwirtschaftlichen Arbeitsmaschine in Abhängigkeit des vorhandenen Anteil des Ernteguts eines Bereichs des digitalen Bildes oder mehrere Bereiche des digitalen Bildes zu bewirken. Die Einstellvorrichtung kann dazu vorgesehen und eingerichtet, insbesondere ausgebildet und/oder programmiert, sein, dass lediglich genau ein Bereich, insbesondere Teilbereich, des digitalen Bildes zur Ermittlung des vorhandenen Anteils des Ernteguts verwendet wird, während der restliche Bereich des digitalen Bildes bei der Ermittlung des vorhandenen Anteils des Ernteguts ignoriert wird. Alternativ kann die Einstellvorrichtung dazu vorgesehen und eingerichtet, insbesondere ausgebildet und/oder programmiert, sein, mehrere Bereiche, insbesondere mehrere Teilbereiche, des digitalen Bildes zur Ermittlung des gesamten vorhandenen Anteils des Ernteguts zu verwenden, wobei die jeweils vorhandenen Anteile des Ernteguts der mehreren Bereiche unterschiedlich gewichtet und dann verknüpft werden, um den gesamten vorhandenen Anteil des Ernteguts zu bestimmen. Es kann vorgesehen sein, dass die mehreren Bereiche derart ausgewählt und/oder festgelegt werden, dass sich diese mehreren Bereiche nicht überlappen.

Bei einer vorteilhaften Weiterbildung der erfindungsgemäßen Lösung ist vorgesehen, dass einer der unterschiedlichen Bereiche des digitalen Bildes einen Nahbereich eines Umfeldes der selbstfahrenden landwirtschaftlichen Arbeitsmaschine ausbildet, und/oder dass einer der unterschiedlichen Bereiche des digitalen Bildes einen Fernbereich eines Umfeldes der selbstfahrenden landwirtschaftlichen Arbeitsmaschine ausbildet, und/oder dass einer der unterschiedlichen Bereiche des digitalen Bildes einen Mittelbereich eines Umfeldes der selbstfahrenden landwirtschaftlichen Arbeitsmaschine ausbildet.

Der Nahbereich des Umfeldes der selbstfahrenden landwirtschaftlichen Arbeitsmaschine betrifft einen Bereich der Umgebung der selbstfahrenden landwirtschaftlichen Arbeitsmaschine, der näher an der Kameravorrichtung der selbstfahrenden landwirtschaftlichen Arbeitsmaschine positioniert ist als die Bereiche der Umgebung, die der Mittelbereich und der Fernbereich betreffen.

Der Mittelbereich des Umfeldes der selbstfahrenden landwirtschaftlichen Arbeitsmaschine betrifft einen Bereich der Umgebung der selbstfahrenden landwirtschaftlichen Arbeitsmaschine, der näher an der Kameravorrichtung der selbstfahrenden landwirtschaftlichen Arbeitsmaschine positioniert ist als der Bereich der Umgebung, den der Fernbereich betrifft, und entfernter von der Kameravorrichtung der selbstfahrenden landwirtschaftlichen Arbeitsmaschine positioniert ist als der Bereich der Umgebung, den der Nahbereich betrifft.

Der Fernbereich des Umfeldes der selbstfahrenden landwirtschaftlichen Arbeitsmaschine betrifft einen Bereich der Umgebung der selbstfahrenden landwirtschaftlichen Arbeitsmaschine, der entfernter von der Kameravorrichtung der selbstfahrenden landwirtschaftlichen Arbeitsmaschine positioniert ist als die Bereiche der Umgebung, die der Nahbereich und der Mittelbereich betreffen.

Bei einer vorteilhaften Weiterbildung der erfindungsgemäßen Lösung ist vorgesehen, dass die Einstellvorrichtung dazu vorgesehen und eingerichtet, insbesondere ausgebildet und/oder programmiert, ist, eine kurzfristige präzise Einstellung des wenigstens einen Arbeitsaggregats und/oder der Fahrgeschwindigkeit der selbstfahrenden landwirtschaftlichen Arbeitsmaschine in Abhängigkeit des vorhandenen Anteils des Ernteguts des Nahbereichs des digitalen Bildes zu bewirken und eine frühzeitige grobe Einstellung des wenigstens einen Arbeitsaggregats und/oder der Fahrgeschwindigkeit der selbstfahrenden landwirtschaftlichen Arbeitsmaschine in Abhängigkeit des vorhandenen Anteils des Ernteguts des Mittelbereichs und/oder des Fernbereichs des digitalen Bildes zu bewirken. Hierdurch wird eine optimale Verwendung der Bereiche des digitalen Bildes zur Einstellung der selbstfahrenden landwirtschaftlichen Arbeitsmaschine ermöglicht. Die Einstellvorrichtung kann dazu vorgesehen und eingerichtet sein, ein Dempster-Shafer-Verfahren durchzuführen und/oder auszuführen.

Eine kurzfristige präzise Einstellung kann einen kleineren Einstellungsparameterbereich aufweisen als die frühzeitige grobe Einstellung. Hierbei kann die frühzeitige grobe Einstellung den einstellungstechnischen Startpunkt der kurzfristigen präzisen Einstellung ausbilden.

Bei einer vorteilhaften Weiterbildung der erfindungsgemäßen Lösung ist vorgesehen, dass innerhalb der selbstfahrenden landwirtschaftlichen Arbeitsmaschine wenigstens eine Sensorvorrichtung zur Erfassung eines Betriebszustandes der selbstfahrenden landwirtschaftlichen Arbeitsmaschine ausgebildet ist, wobei die Einstellvorrichtung dazu vorgesehen und eingerichtet, insbesondere ausgebildet und/oder programmiert, ist, in Abhängigkeit des mittels der Sensorvorrichtung erfassten Betriebszustandes und des ermittelten Anteils des vorhandenen Ernteguts wenigstens ein Arbeitsaggregat und/oder die Fahrgeschwindigkeit der selbstfahrenden landwirtschaftlichen Arbeitsmaschine einzustellen. Wenigstens eine Sensorvorrichtung zur Erfassung von Betriebszuständen der Arbeitsmaschine kann wenigstens einen Sensor zur Erfassung eines Arbeitsparameters des Antriebsmotors aufweisen, und/oder wenigstens einen Sensor zur Erfassung eines Arbeitsparameters wenigstens eines Arbeitsaggregates aufweisen, und/oder wenigstens einen Sensor zur Erfassung von Erntegutverlusten aufweisen. Hierdurch wird die Verwendung des digitalen Bildes zur Einstellung der selbstfahrenden landwirtschaftlichen Arbeitsmaschine optimiert.

Bei einer vorteilhaften Weiterbildung der erfindungsgemäßen Lösung ist vorgesehen, dass die Einstellvorrichtung dazu vorgesehen und eingerichtet, insbesondere ausgebildet und/oder programmiert, ist, eine umgehende akkurate Einstellung des wenigstens einen Arbeitsaggregats und/oder der Fahrgeschwindigkeit der selbstfahrenden landwirtschaftlichen Arbeitsmaschine in Abhängigkeit des erfassten Betriebszustandes der selbstfahrenden landwirtschaftlichen Arbeitsmaschine einzustellen.

Eine umgehende akkurate Einstellung kann einen kleineren Einstellungsparameterbereich aufweisen als die kurzfristige präzise Einstellung und die die frühzeitige grobe Einstellung aufweisen. Hierbei kann kurzfristige präzise Einstellung den einstellungstechnischen Startpunkt der umgehenden akkuraten Einstellung ausbilden. Insgesamt wird die Einstellung der selbstfahrenden landwirtschaftlichen Arbeitsmaschine optimiert.

Bei einer vorteilhaften Weiterbildung der erfindungsgemäßen Lösung ist vorgesehen, dass vollständige Pflanzen des Pflanzenbestandes jeweils einen Blütenstandsstiel und einen Fruchtstand aufweisen, und dass unvollständige Pflanzen des Pflanzenbestandes allenfalls einen Blütenstandsstiel aufweisen, wobei die Einstellvorrichtung dazu vorgesehen und eingerichtet, insbesondere ausgebildet und/oder programmiert, ist, Bildbereiche bezüglich der Fruchtstände des Pflanzenbestandes innerhalb des digitalen Bildes zu erfassen und zur Ermittlung des vorhandenen Anteils des Ernteguts zu verwenden. Der Fruchtstand kann als einfacher Fruchtstand in Form einer Ähre, eines Ährechens und/oder eines Kolbens ausgebildet sein.

Bei einer vorteilhaften Weiterbildung der erfindungsgemäßen Lösung ist vorgesehen, dass die Einstellvorrichtung dazu vorgesehen und eingerichtet ist, Umrandungspolygone zur Erfassung der Bildbereiche bezüglich der Fruchtstände des Pflanzenbestandes zu verwenden und zur Einstellung wenigstens eines Arbeitsaggregats und/oder der Fahrgeschwindigkeit der selbstfahrenden landwirtschaftlichen Arbeitsmaschine zu verwenden. Ein solcher Umrandungspolygon kann als geschlossener Umrandungspolygon ausgebildet sein, welches innerhalb des digitalen Bildes die Fruchtstände des Pflanzenbestandes, insbesondere auswertungstechnisch, umrandetet. Das Umrandungspolygon kann als Viereck ausgebildet sein, um die erforderliche Rechenleistung und Bestimmungszeit zur Erfassung der Position des Umrandungspolygons zu reduzieren.

Bei einer vorteilhaften Weiterbildung der erfindungsgemäßen Lösung ist vorgesehen, dass die Einstellvorrichtung dazu vorgesehen und eingerichtet ist, eine Anzahl von Pixeln der Bildbereiche, insbesondere innerhalb der Umrandungspolygone, bezüglich der Fruchtstände des Pflanzenbestandes innerhalb des digitalen Bildes zur Ermittlung des vorhandenen Anteils des Ernteguts zu verwenden und zur Einstellung wenigstens eines Arbeitsaggregats und/oder der Fahrgeschwindigkeit der selbstfahrenden landwirtschaftlichen Arbeitsmaschine zu verwenden.

Bei einer vorteilhaften Weiterbildung der erfindungsgemäßen Lösung ist vorgesehen, dass die Einstellvorrichtung dazu vorgesehen und eingerichtet ist, rechteckförmige Umrandungspolygone zur Erfassung der Bildbereiche bezüglich der Fruchtstände des Pflanzenbestandes zu verwenden.

Bei einer vorteilhaften Weiterbildung der erfindungsgemäßen Lösung ist vorgesehen, dass die Einstellvorrichtung dazu vorgesehen und eingerichtet ist, im digitalen Bild vorhandene überlappende Bildbereiche, insbesondere sich überlappende Umrandungspolygone, bezüglich der Fruchtstände des Pflanzenbestandes zu einem Bildbereiche, insbesondere zu einem Umrandungspolygon, zusammenzufügen. Hierbei kann es vorgesehen sein, dass sich mehrere überlappende rechteckförmige Umrandungspolygone zu genau einem passenden größeren rechteckförmige Umrandungspolygone zusammengeführt werden. Durch das Zusammenführen mehrere überlappender Umrandungspolygone wird beispielweise der Fehleranteil der Pixelanzahl bezüglich der Fruchtstände des Pflanzenbestandes reduziert und Einstellung des wenigstens einen Arbeitsaggregats und/oder die Fahrgeschwindigkeit der selbstfahrenden landwirtschaftlichen Arbeitsmaschine mittels der Einstellvorrichtung optimiert.

Bei einer vorteilhaften Weiterbildung der erfindungsgemäßen Lösung ist vorgesehen, dass dass die Einstellvorrichtung dazu vorgesehen und eingerichtet ist, bei der Ermittlung des Anteils des vorhandenen Ernteguts in einem Datensatz, insbesondere in einem internen und/oder externen Datenspeicher, hinterlegte Erntegutinformationen, Wetterinformationen, Standortinformationen, satellitenbasierten Informationen, insbesondere bezüglich des Einsatzortes der selbstfahrenden landwirtschaftlichen Arbeitsmaschine, und/oder Feldinformationen einzubeziehen. Die Erntegutinformationen können Informationen bezüglich der Erntegutart sein. Die Wetterinformationen können eine einstellungstechnische Relevanz bezüglich der Sichtweite und/oder Genauigkeit des mittels der Kameravorrichtung erfassten digitalen Bildes aufweisen. Die Standortinformationen, satellitenbasierten Informationen und/oder Feldinformationen können eine einstellungstechnische Relevanz bezüglich der Erntegutart und/oder der Einstellung, insbesondere Einstellungsart, der selbstfahrenden landwirtschaftlichen Arbeitsmaschine bilden.

Die selbstfahrende landwirtschaftliche Arbeitsmaschine kann eine Positionsbestimmungseinrichtung zur satellitenbasierten Erfassung einer Position der landwirtschaftlichen Arbeitsmaschine bezüglich des landwirtschaftlichen Feldes aufweisen, um die satellitenbasierten Positionsinformationen zu erfassen. Die Positionsbestimmungseinrichtung kann zur Positionsbestimmung mittels Satellitennavigationssignalen ausgebildet und/oder programmiert sein, um beispielsweise Positionsdaten bereitstellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position der landwirtschaftlichen Arbeitsmaschine auf dem landwirtschaftlichen Feld zu ermitteln. Hierbei kann die stationäre Bodenstation außerhalb des landwirtschaftlichen Feldes angeordnet sein.

Bei einer vorteilhaften Weiterbildung der erfindungsgemäßen Lösung ist vorgesehen, dass die Einstellvorrichtung dazu vorgesehen und eingerichtet ist, und basierend auf diesem ermittelten Anteil des vorhandenen Ernteguts wenigstens ein Arbeitsaggregat und/oder die Fahrgeschwindigkeit der selbstfahrenden landwirtschaftlichen Arbeitsmaschine derart einzustellen, dass ein vorgegebener Erntegutstrom durch die selbstfahrende landwirtschaftliche Arbeitsmaschine eingestellt wird.

Bei einer vorteilhaften Weiterbildung der erfindungsgemäßen Lösung ist vorgesehen, dass die Einstellvorrichtung dazu vorgesehen und eingerichtet ist, und basierend auf diesem ermittelten Anteil des vorhandenen Ernteguts wenigstens ein Arbeitsaggregat und/oder die Fahrgeschwindigkeit der selbstfahrenden landwirtschaftlichen Arbeitsmaschine derart einzustellen, dass ein Erntegutverlust, insbesondere Kornverunreinigungen, Bruchkorn, Strohqualität und/oder der Treibstoffeinsatz, durch die selbstfahrende landwirtschaftliche Arbeitsmaschine minimiert wird. Die selbstfahrende landwirtschaftliche Arbeitsmaschine kann wenigstens einen Sensor oder mehrere Sensoren zur Erntegutverlusterfassung aufweisen.

Ferner betrifft die Erfindung eine einstellungstechnische Verwendung eines digitalen Bildes eines Pflanzenbestandes eines landwirtschaftlichen Feldes einer Umgebung einer erfindungsgemäßen selbstfahrenden landwirtschaftlichen Arbeitsmaschine zur Ermittlung eines Anteils an Erntegut des Pflanzenbestandes und zur Einstellung wenigstens eines Arbeitsaggregats und/oder einer Fahrgeschwindigkeit der erfindungsgemäßen selbstfahrenden landwirtschaftlichen Arbeitsmaschine in Abhängigkeit des ermittelten Anteils des Ernteguts mittels einer Einstellvorrichtung der erfindungsgemäßen selbstfahrenden landwirtschaftlichen Arbeitsmaschine, sodass ein Durchsatz eines Erntegutstroms durch die erfindungsgemäßen selbstfahrende landwirtschaftliche Arbeitsmaschine mit minimierten Erntegutverlusten mittels einer Einstellung wenigstens eines Arbeitsaggregats und/oder die Fahrgeschwindigkeit der selbstfahrenden landwirtschaftlichen Arbeitsmaschine geregelt wird. Die selbstfahrende landwirtschaftliche Arbeitsmaschine kann ein und/oder mehrere zuvor als auch nachfolgend beschriebene Details aufweisen.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht einer erfindungsgemäßen selbstfahrenden landwirtschaftlichen Arbeitsmaschine beim Einsatz auf einem landwirtschaftlichen Feld, und
- Fig. 2: eine Draufsicht während des landwirtschaftlichen Einsatzes der erfindungsgemäßen selbstfahrenden landwirtschaftlichen Arbeitsmaschine, und
- Fig. 3: ein digitales Bild, welches mit einer Kameravorrichtung der erfindungsgemäßen selbstfahrenden landwirtschaftlichen Arbeitsmaschine während des Einsatzes auf einem landwirtschaftlichen Feld erfasst wurde, und
- Fig. 4: einen vergrößerten Teilbereich des digitalen Bildes der Fig. 3.

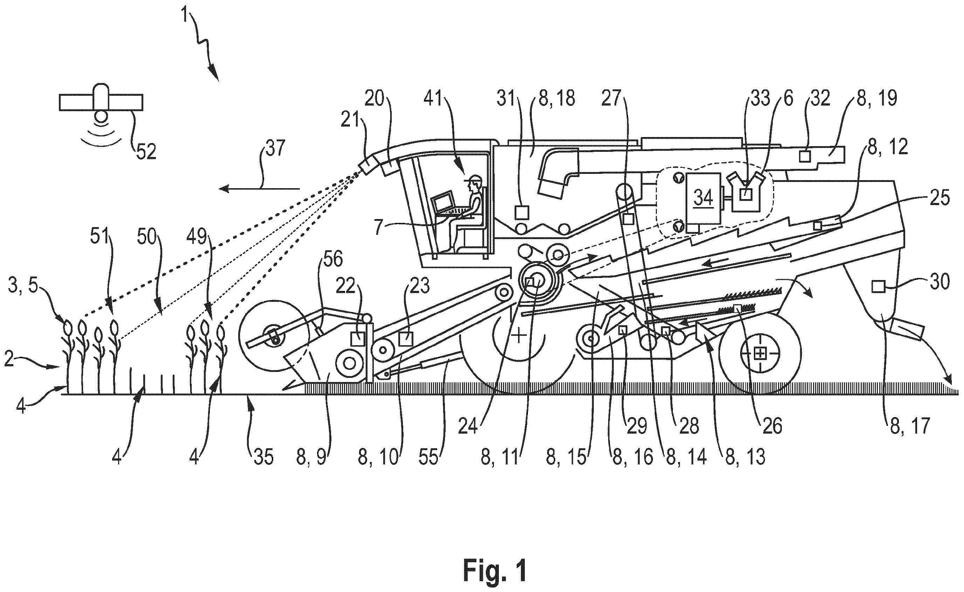

Die Fig. 1 zeigt eine erfindungsgemäße selbstfahrende landwirtschaftliche Arbeitsmaschine 1 während eines Einsatzes auf einem landwirtschaftlichen Feldes 35. Diese selbstfahrende landwirtschaftliche Arbeitsmaschine 1 ist zwar beispielhaft als selbstfahrende Mähdrescher dargestellt, kann jedoch auch als selbstfahrender Feldhäcksler ausgebildet sein.

Das landwirtschaftlichen Feld 35 kann beispielsweise einen Pflanzenbestand 2 mit unterschiedlich ausgebildeten Bereichen 49, 50 und 51 aufweisen, wobei der Pflanzenbestand 2 in den Bereichen 49 und 51 vollständige Pflanzen aufweist, die jeweils einen Blütenstandstiel 4 und einen damit verbundenen Fruchtstand 5, der ein Erntegut 3 ausbildet, aufweisen, wohingegen im Bereich 50 allenfalls Blütenstandstiele 4 vorhanden sind, die kein Erntegut 3 mehr ausbilden.

Der selbstfahrende Mähdrescher 1 weist mehrere Arbeitsaggregate 8 zum Aufnehmen, Bearbeiten und Weiterleiten des Ernteguts 3 des Pflanzenbestandes 2 des landwirtschaftlichen Feldes 35 auf. Während der Fahrt entlang der Fahrtrichtung 37 durch den Pflanzenbestand 2 nimmt der selbstfahrende Mähdrescher 1 mit einem Schneidwerk 9 das Erntegut 3 auf. Mit einem Schrägförderer 10 wird dieses Erntegut 3 zum Dreschwerk 11 gefördert. In dem Dreschwerk 11, einer Abscheidungsvorrichtung 12 und einer Förder- und Reinigungsvorrichtung 13 werden die Körner vom restlichen Erntegut getrennt, sodass ein Erntegutstrom entsteht. Die Reinigungsvorrichtung 13 weist ein Gebläse 16 zur Reinigung auf. Der Mähdrescher 1 weist einen Kornelevator 14 zur Förderung eines Erntegutstroms von der Förder- und Reinigungsvorrichtung 13 zu einem Korntank 18 des Mähdreschers 1 auf. Ferner weist der Mähdrescher 1 einen Überkehrschnecke 15 und einen Strohhäcksler 17 auf. Außerdem weist der selbstfahrenden Mähdrescher 1 eine Korntankentleerungsvorrichtung 19 zur Entleerung des Korntanks 18 auf. Diese bisher genannten Komponenten des selbstfahrenden Mähdreschers 1 bilden mehrere Arbeitsaggregate 6 aus, die zur Aufnahme, Bearbeitung und/oder Weiterleitung des Ernteguts ausgebildet sind und über einen Antriebsmotor 6 antriebstechnisch versorgt werden. Dieser Antriebsmotor 6 ist neben dem Antrieb der Arbeitsaggregate 8 und zum Vortrieb der selbstfahrenden landwirtschaftlichen Arbeitsmaschine 1 mit einer Fahrgeschwindigkeit in Richtung der Fahrtrichtung 37 entlang des landwirtschaftlichen Feldes 35 ausgebildet. Der Antriebsmotor 6 kann mittels wenigstens einer und/oder mehreren Kopplungsvorrichtungen 34 mit den Arbeitsaggregaten 8 zum Antrieb gekoppelt sein.

Die selbstfahrenden landwirtschaftlichen Arbeitsmaschine 1 weist eine Kameravorrichtung 21 auf, die frontseitig an der selbstfahrenden landwirtschaftlichen Arbeitsmaschine 1 angeordnet ist. Diese Kameravorrichtung 21 ist dazu vorgesehen und eingerichtet, ein digitales Bild 21a des Pflanzenbestandes 2 des landwirtschaftlichen Feldes 35 in der bezüglich der Fahrtrichtung 37 frontseitigen Umgebung der selbstfahrenden landwirtschaftlichen Arbeitsmaschine 1 zu erfassen.

Die selbstfahrende landwirtschaftliche Arbeitsmaschine 1 weist eine Einstellvorrichtung 7 auf, die dazu vorgesehen und eingerichtet ist, mittels des digitalen Bildes 21a der Kameravorrichtung 21 einen im Pflanzenbestand 2 vorhandenen Anteil des Ernteguts 3 in Form des Blütenstandes 5 zu ermitteln und basierend auf diesem ermittelten Anteil des vorhandenen Ernteguts 3 wenigstens ein Arbeitsaggregat 8, insbesondere einen Aktor 55 oder 56 eines Arbeitsaggregat 8, und/oder die Fahrgeschwindigkeit der selbstfahrenden landwirtschaftlichen Arbeitsmaschine 1 einzustellen, insbesondere automatisch und daher ohne einen Arbeitsaufwand eines Fahrers 41 einzustellen. Zusätzlich kann die selbstfahrende landwirtschaftliche Arbeitsmaschine 1 eine weitere Sensorvorrichtung 20, insbesondere in Form einer Kamera und/oder eines LIDAR-Systems, zur Erfassung von Umgebungszuständen der selbstfahrende landwirtschaftliche Arbeitsmaschine 1 aufweisen.

Innerhalb der selbstfahrenden landwirtschaftlichen Arbeitsmaschine 1 ist wenigstens eine Sensorvorrichtung 22, 23, 24, 25, 26, 27, 28, 29, 30, 31, 32, 33 zur Erfassung eines Betriebszustandes der selbstfahrenden landwirtschaftlichen Arbeitsmaschine 1, insbesondere eines Arbeitsaggregats 8 und/oder des Antriebsmotors 6 ausgebildet ist, wobei die Einstellvorrichtung 7 dazu vorgesehen und eingerichtet ist, in Abhängigkeit des mittels der Sensorvorrichtung 22, 23, 24, 25, 26, 27, 28, 29, 30, 31, 32, 33 erfassten Betriebszustandes und des ermittelten Anteils des vorhandenen Ernteguts 3 wenigstens ein Arbeitsaggregat 8 und/oder die Fahrgeschwindigkeit der selbstfahrenden landwirtschaftlichen Arbeitsmaschine 1 einzustellen.

Die Sensorvorrichtung 22 des Arbeitsaggregates 8, welches als Schneidwerk 9 ausgebildet ist, ist zur Erfassung von Betriebszuständen des Schneidwerks 9 ausgebildet und/oder positioniert. Die Sensorvorrichtung 23 des Arbeitsaggregates 8, welches als Schrägförderer 20 ausgebildet ist, ist zur Erfassung von Betriebszuständen des Schrägförderers 10 ausgebildet und/oder positioniert. Die Sensorvorrichtung 24 des Arbeitsaggregates 8, welches als Dreschwerk 11 ausgebildet ist, ist zur Erfassung von Betriebszuständen des Dreschwerkes 11 ausgebildet und/oder positioniert. Die Sensorvorrichtung 25 des Arbeitsaggregates 8, welches als Abscheidevorrichtung 12 ausgebildet ist, ist zur Erfassung von Betriebszuständen der Abscheidevorrichtung 12 ausgebildet und/oder positioniert. Die Sensorvorrichtung 26 des Arbeitsaggregates 8, welches als Förder- und Reinigungsvorrichtung 13 ausgebildet ist, ist zur Erfassung von Betriebszuständen der Förder- und Reinigungsvorrichtung 13 ausgebildet und/oder positioniert. Die Sensorvorrichtung 27 des Arbeitsaggregates 8, welches als Kornelevator 14 ausgebildet ist, ist zur Erfassung von Betriebszuständen des Kornelevators 14 ausgebildet und/oder positioniert. Die Sensorvorrichtung 28 des Arbeitsaggregates 8, welches als Überkehrschnecke 15 ausgebildet ist, ist zur Erfassung von Betriebszuständen der Überkehrschnecke 15 ausgebildet und/oder positioniert. Die Sensorvorrichtung 29 des Arbeitsaggregates 8, welches als Gebläse 16 ausgebildet ist, ist zur Erfassung von Betriebszuständen des Gebläses 16 ausgebildet und/oder positioniert. Die Sensorvorrichtung 30 des Arbeitsaggregates 8, welches als Strohhäcksler 17 ausgebildet ist, ist zur Erfassung von Betriebszuständen des Strohhäckslers 17 ausgebildet und/oder positioniert. Die Sensorvorrichtung 31 des Arbeitsaggregates 8, welches als Korntank 18 ausgebildet ist, ist zur Erfassung von Betriebszuständen des Korntanks 18 ausgebildet und/oder positioniert. Die Sensorvorrichtung 33 des Antriebsmotors 6 ist zur Erfassung von Betriebszuständen, insbesondere der Drehzahl, des Antriebsmotors 6 ausgebildet und/oder positioniert. Die Sensorvorrichtung 32 des Arbeitsaggregates 8, welches als Korntankentleerungsvorrichtung 19 ausgebildet ist, ist zur Erfassung von Betriebszuständen der Korntankentleerungsvorrichtung 19 ausgebildet und/oder positioniert. Eine nicht dargestellte Sensorvorrichtung kann eine Antriebsleistung als Indikator für den Durchsatz erfassen.

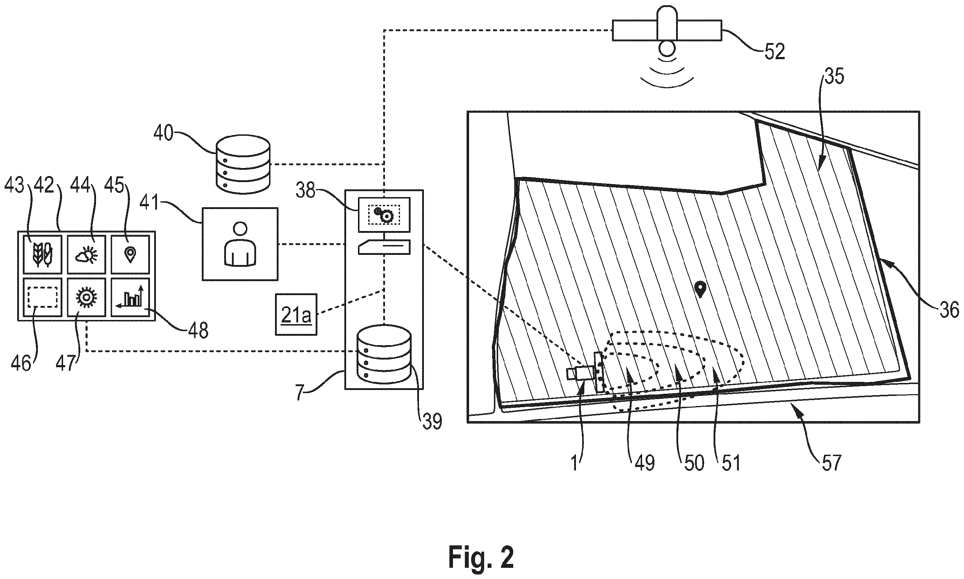

Die Fig. 2 zeigt eine Draufsicht bezüglich des landwirtschaftlichen Einsatzes der erfindungsgemäßen selbstfahrenden landwirtschaftlichen Arbeitsmaschine 1 auf dem landwirtschaftlichen Feld 35, welches durch Feldgrenzen 36 vom Nichtfeldbereich 57 abgegrenzt ist. Die Einstellvorrichtung 7 kann eine Rechenvorrichtung 38 und einen internen Datenspeicher 39 aufweisen. Alternativ oder zusätzlich kann die Einstellvorrichtung 7 kommunizierend mit einem internen Datenspeicher 40 verbunden sein. Alternativ oder zusätzlich kann die Einstellvorrichtung 7 kommunizierend mit wenigstens einem Satelliten 52 zur Positionsbestimmung der selbstfahrenden landwirtschaftlichen Arbeitsmaschine 1 verbunden sein. In dem Datenspeicher 39 und/oder 40 ein Datensatz 42 gespeichert sein, in dem Erntegutinformationen 43, Wetterinformationen 44, Standortinformationen 45, satellitenbasierte Informationen 52 und/oder Feldinformationen 46 hinterlegt sind und bei der Ermittlung des Anteils des vorhandenen Ernteguts 3 mittels der Einstellvorrichtung 7 zusätzlich verwendet werden können.

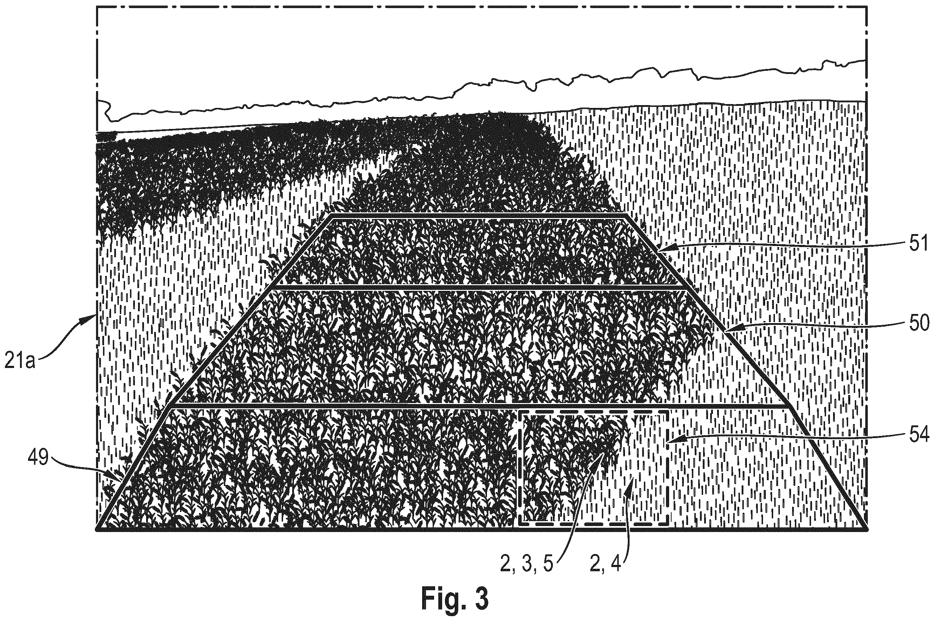

Wie in der Fig. 1 und Fig. 2 angedeutet werden unterschiedliche Bereiche 49, 50, 51 des landwirtschaftlichen Feldes mittels der Kameravorrichtung 21 erfasst. Wie in der Fig. 3 angedeutet, ist die Einstellvorrichtung 7 dazu vorgesehen und eingerichtet, in diesen unterschiedlichen Bereichen 49, 50, 51 des digitalen Bildes 21a jeweils den im Pflanzenbestand 2 dieses Bereiches 49, 50, 51 vorhandenen Anteil des Ernteguts 3 zu ermitteln und die Einstellung des wenigstens einen Arbeitsaggregats 8 und/oder der Fahrgeschwindigkeit der selbstfahrenden landwirtschaftlichen Arbeitsmaschine 1 in Abhängigkeit des vorhandenen Anteil des Ernteguts 3 eines Bereichs 49, 50, 51 des digitalen Bildes 21a oder mehrere Bereiche 49, 50, 51 des digitalen Bildes 21a zu bewirken.

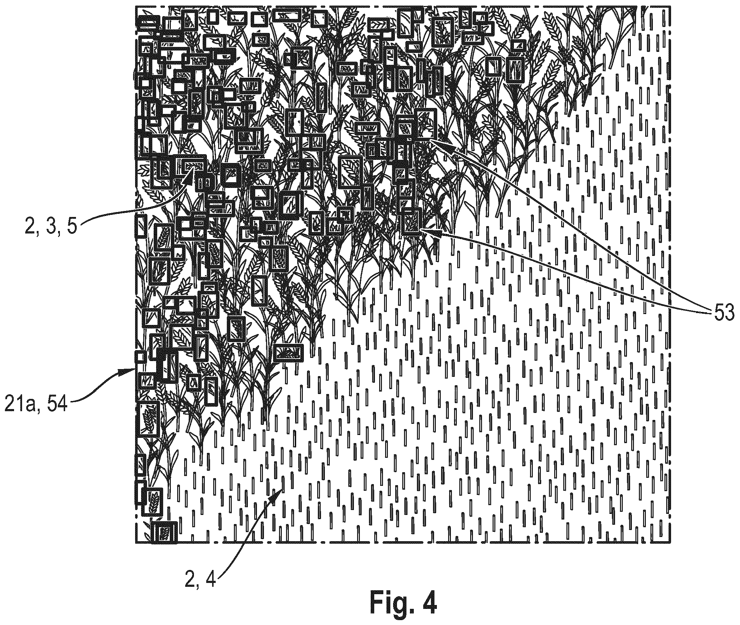

Einer der unterschiedlichen Bereiche 49, 50, 51 des digitalen Bildes 21a bildet einen Nahbereich 49, einen Mittelbereich 50 und einen Fernbereich 51 des Umfeldes der selbstfahrenden landwirtschaftlichen Arbeitsmaschine 1 aus. In der Fig. 3 ist beispielhaft dargestellt, dass der Nahbereich 49 nicht vollständig mit Erntegut 3 in Form des Blütenstandes 5 ausgebildet ist, sondern auch einen Bereich mit lediglich Blütenstandstiele 4 aufweist. Der Teilabschnitt 54 des Nahbereiches 49 ist in der Fig. 4 vergrößert dargestellt.

Vollständige Pflanzen des Pflanzenbestandes 2 weisen jeweils einen Blütenstandsstiel 4 und einen Fruchtstand 5 auf, während unvollständige Pflanzen des Pflanzenbestandes 2 allenfalls einen Blütenstandsstiel 4 aufweisen, wobei die Einstellvorrichtung 7 dazu vorgesehen und eingerichtet ist, Bildbereiche 53 bezüglich der Fruchtstände 5 des Pflanzenbestandes 2 innerhalb des digitalen Bildes 21a zu erfassen und zur Ermittlung des vorhandenen Anteils des Ernteguts 3 zu verwenden. Die Einstellvorrichtung 7 ist dazu vorgesehen und eingerichtet ist, Umrandungspolygone 53 zur Erfassung der Bildbereiche bezüglich der Fruchtstände 5 des Pflanzenbestandes 2 zu verwenden.

Der vorhandene Anteil des Ernteguts 3 im digitalen Bild 21a der Kameravorrichtung 21 kann die Anzahl und/oder Abmessungen und/oder Flächen von Bildbereichen der Umrandungspolygone 53 des digitalen Bilds 21a betreffen, die das Erntegut darstellen, im Verhältnis zur gesamten Bildflächengröße des digitalen Bildes 21a.

Alternativ oder zusätzlich kann der vorhandene Anteil des Ernteguts 3 im digitalen Bild 21a der Kameravorrichtung 21 die Anzahl der Pixel betreffen, die das Erntegut 3 darstellen, im Verhältnis zur gesamten Anzahl der Pixel des digitalen Bild 21a.

Die Einstellvorrichtung 7 kann dazu vorgesehen und eingerichtet sein, rechteckförmige Umrandungspolygone 53 zur Erfassung der Bildbereiche bezüglich der Fruchtstände 5 des Pflanzenbestandes 2 zu verwenden.

Hierdurch können entsprechende Pflanzenpixel von erntefähigen Pflanzenkomponente innerhalb der erhaltenen Bilddaten 21a bezüglich einer oder mehreren Zielpflanzen 2 identifiziert und/oder gezählt und/oder im Verhältnis zur Gesamtpixelzahl der Bilddaten betrachtet werden, um Einstellungsparameter für die Arbeitsmaschine zu ermitteln.

### Bezugszeichenliste

- 1: Selbstfahrende landwirtschaftliche Arbeitsmaschine
- 2: Pflanzenbestand
- 3: Erntegut
- 4: Blütenstandsstiel
- 5: Blütenstand
- 6: Antriebsmotor
- 7: Einstellvorrichtung
- 8: Arbeitsaggregat
- 9: Schneidwerk
- 10: Schrägförderer
- 11: Dreschwerk
- 12: Abscheidevorrichtung
- 13: Förder- und Reinigungsvorrichtung
- 14: Kornelevator
- 15: Überkehrschnecke
- 16: Gebläse
- 17: Strohhäcksler
- 18: Korntank
- 19: Korntankentleerungsvorrichtung
- 20: Sensorvorrichtung zur Erfassung von Umgebungszuständen
- 21: Kameravorrichtung zur Erfassung eines digitalen Bildes 21a
- 22: Sensorvorrichtung zur Erfassung von Betriebszuständen
- 23: Sensorvorrichtung zur Erfassung von Betriebszuständen
- 24: Sensorvorrichtung zur Erfassung von Betriebszuständen
- 25: Sensorvorrichtung zur Erfassung von Betriebszuständen
- 26: Sensorvorrichtung zur Erfassung von Betriebszuständen
- 27: Sensorvorrichtung zur Erfassung von Betriebszuständen
- 28: Sensorvorrichtung zur Erfassung von Betriebszuständen
- 29: Sensorvorrichtung zur Erfassung von Betriebszuständen
- 30: Sensorvorrichtung zur Erfassung von Betriebszuständen
- 31: Sensorvorrichtung zur Erfassung von Betriebszuständen
- 32: Sensorvorrichtung zur Erfassung von Betriebszuständen
- 33: Sensorvorrichtung zur Erfassung von Betriebszuständen
- 34: Kopplungsvorrichtung
- 35: landwirtschaftliches Feld
- 36: Feldgrenze
- 37: Fahrtrichtung
- 38: Rechenvorrichtung
- 39: interner Datenspeicher
- 40: externer Datenspeicher
- 41: Fahrer
- 42: Datensatz
- 43: Erntegutinformationen
- 44: Wetterinformationen
- 45: Standortinformationen
- 46: Feldinformationen
- 47: Arbeitsmaschineparameter
- 48: Betriebszustände
- 49: Nahbereich
- 50: Mittelbereich
- 51: Fernbereich
- 52: Satellit
- 53: Umrandungspolygon mit Bildbereich
- 54: Teilabschnitt
- 55: Aktor
- 56: Aktor
- 57: Nichtfeldbereich

## Patentansprüche

1. Selbstfahrende landwirtschaftliche Arbeitsmaschine (1),
- mit Arbeitsaggregaten (8) zum Aufnehmen, Bearbeiten und Weiterleiten von Erntegut (3) eines Pflanzenbestandes (2) eines landwirtschaftlichen Feldes (35),
- mit einem Antriebsmotor (6) zum Antrieb der Arbeitsaggregate (8) und zum Vortrieb der selbstfahrenden landwirtschaftlichen Arbeitsmaschine (1) mit einer Fahrgeschwindigkeit entlang des landwirtschaftlichen Feldes (35),
- mit einer Kameravorrichtung (21) zur Erfassung eines digitalen Bildes (21a) des Pflanzenbestandes (2) des landwirtschaftlichen Feldes (35) in einer Umgebung der selbstfahrenden landwirtschaftlichen Arbeitsmaschine (1),
**dadurch gekennzeichnet,**
- **dass** die selbstfahrende landwirtschaftliche Arbeitsmaschine (1) eine Einstellvorrichtung (7) aufweist, die dazu vorgesehen und eingerichtet ist, mittels des digitalen Bildes (21a) der Kameravorrichtung (21) einen im Pflanzenbestand (2) vorhandenen Anteil des Ernteguts (3) zu ermitteln und basierend auf diesem ermittelten Anteil des vorhandenen Ernteguts (3) wenigstens ein Arbeitsaggregat (8) und/oder die Fahrgeschwindigkeit der selbstfahrenden landwirtschaftlichen Arbeitsmaschine (1) einzustellen.

2. Selbstfahrende landwirtschaftliche Arbeitsmaschine (1) nach Anspruch 1,
**dadurch gekennzeichnet,**
**dass** die Einstellvorrichtung (7) dazu vorgesehen und eingerichtet ist, in unterschiedlichen Bereichen (49, 50, 51) des digitalen Bildes (21a) jeweils den im Pflanzenbestand (2) dieses Bereiches (49, 50, 51) vorhandenen Anteil des Ernteguts (3) zu ermitteln und die Einstellung des wenigstens einen Arbeitsaggregats (8) und/oder der Fahrgeschwindigkeit der selbstfahrenden landwirtschaftlichen Arbeitsmaschine (1) in Abhängigkeit des vorhandenen Anteil des Ernteguts (3) eines Bereichs (49, 50, 51) des digitalen Bildes (21a) oder mehrere Bereiche (49, 50, 51) des digitalen Bildes (21a) zu bewirken.

3. Selbstfahrende landwirtschaftliche Arbeitsmaschine (1) nach Anspruch 2,
**dadurch gekennzeichnet,**
- **dass** einer der unterschiedlichen Bereiche (49, 50, 51) des digitalen Bildes (21a) einen Nahbereich (49) eines Umfeldes der selbstfahrenden landwirtschaftlichen Arbeitsmaschine (1) ausbildet, und/oder
- **dass** einer der unterschiedlichen Bereiche (49, 50, 51) des digitalen Bildes (21a) einen Fernbereich (51) eines Umfeldes der selbstfahrenden landwirtschaftlichen Arbeitsmaschine (1) ausbildet, und/oder
- **dass** einer der unterschiedlichen Bereiche (49, 50, 51) des digitalen Bildes (21a) einen Mittelbereich (50) eines Umfeldes der selbstfahrenden landwirtschaftlichen Arbeitsmaschine (1) ausbildet.

4. Selbstfahrende landwirtschaftliche Arbeitsmaschine (1) nach Anspruch 3,
**dadurch gekennzeichnet,**
**dass** die Einstellvorrichtung (7) dazu vorgesehen und eingerichtet ist, eine kurzfristige präzise Einstellung des wenigstens einen Arbeitsaggregats (8) und/oder der Fahrgeschwindigkeit der selbstfahrenden landwirtschaftlichen Arbeitsmaschine (1) in Abhängigkeit des vorhandenen Anteils des Ernteguts (3) des Nahbereichs (49) des digitalen Bildes (21a) zu bewirken und eine frühzeitige grobe Einstellung des wenigstens einen Arbeitsaggregats (8) und/oder der Fahrgeschwindigkeit der selbstfahrenden landwirtschaftlichen Arbeitsmaschine (1) in Abhängigkeit des vorhandenen Anteils des Ernteguts (3) des Mittelbereichs (50) und/oder des Fernbereichs (51) des digitalen Bildes (21a) zu bewirken.

5. Selbstfahrende landwirtschaftliche Arbeitsmaschine (1) nach einem der vorhergehenden Ansprüche,
**dadurch gekennzeichnet,**
- **dass** innerhalb der selbstfahrenden landwirtschaftlichen Arbeitsmaschine (1) wenigstens eine Sensorvorrichtung (22, 23, 24, 25, 26, 27, 28, 29, 30, 31, 32, 33) zur Erfassung eines Betriebszustandes der selbstfahrenden landwirtschaftlichen Arbeitsmaschine (1) ausgebildet ist,
- wobei die Einstellvorrichtung (7) dazu vorgesehen und eingerichtet ist, in Abhängigkeit des mittels der Sensorvorrichtung (22, 23, 24, 25, 26, 27, 28, 29, 30, 31, 32, 33) erfassten Betriebszustandes und des ermittelten Anteils des vorhandenen Ernteguts (3) wenigstens ein Arbeitsaggregat (8) und/oder die Fahrgeschwindigkeit der selbstfahrenden landwirtschaftlichen Arbeitsmaschine (1) einzustellen.

6. Selbstfahrende landwirtschaftliche Arbeitsmaschine (1) nach Anspruch 5,
**dadurch gekennzeichnet,**
**dass** die Einstellvorrichtung (7) dazu vorgesehen und eingerichtet ist, eine umgehende akkurate Einstellung des wenigstens einen Arbeitsaggregats (8) und/oder der Fahrgeschwindigkeit der selbstfahrenden landwirtschaftlichen Arbeitsmaschine (1) in Abhängigkeit des erfassten Betriebszustandes der selbstfahrenden landwirtschaftlichen Arbeitsmaschine (1) einzustellen.

7. Selbstfahrende landwirtschaftliche Arbeitsmaschine (1) nach einem der vorhergehenden Ansprüche,
**dadurch gekennzeichnet,**
- **dass** vollständige Pflanzen des Pflanzenbestandes (2) jeweils einen Blütenstandsstiel (4) und einen Fruchtstand (5) aufweisen, und
- **dass** unvollständige Pflanzen des Pflanzenbestandes (2) allenfalls einen Blütenstandsstiel (4) aufweisen,
- wobei die Einstellvorrichtung (7) dazu vorgesehen und eingerichtet ist, Bildbereiche (53) bezüglich der Fruchtstände (5) des Pflanzenbestandes (2) innerhalb des digitalen Bildes (21a) zu erfassen und zur Ermittlung des vorhandenen Anteils des Ernteguts (3) zu verwenden oder,
- **dass** die Einstellvorrichtung (7) dazu vorgesehen und eingerichtet ist, Bildbereiche bezüglich der Blütenstandsstiele (4) des Pflanzenbestandes (2) innerhalb des digitalen Bildes (21a) zu erfassen und zur Ermittlung eines nicht-vorhandenen Anteils des Ernteguts (3) zu verwenden.

8. Selbstfahrende landwirtschaftliche Arbeitsmaschine (1) nach Anspruch 7,
**dadurch gekennzeichnet,**
**dass** die Einstellvorrichtung (7) dazu vorgesehen und eingerichtet ist, Umrandungspolygone (53) zur Erfassung der Bildbereiche bezüglich der Fruchtstände (5) des Pflanzenbestandes (2) zu verwenden.

9. Selbstfahrende landwirtschaftliche Arbeitsmaschine (1) nach Anspruch 7 oder 8,
**dadurch gekennzeichnet,**
**dass** die Einstellvorrichtung (7) dazu vorgesehen und eingerichtet ist, eine Anzahl von Pixeln der Bildbereiche (53), insbesondere innerhalb der Umrandungspolygone (53), bezüglich der Fruchtstände (5) des Pflanzenbestandes (2) innerhalb des digitalen Bildes (21a) zur Ermittlung des vorhandenen Anteils des Ernteguts (3) zu verwenden.

10. Selbstfahrende landwirtschaftliche Arbeitsmaschine (1) nach Anspruch 8 oder 9,
**dadurch gekennzeichnet,**
**dass** die Einstellvorrichtung (7) dazu vorgesehen und eingerichtet ist, rechteckförmige Umrandungspolygone (53) zur Erfassung der Bildbereiche bezüglich der Fruchtstände (5) des Pflanzenbestandes (2) zu verwenden.

11. Selbstfahrende landwirtschaftliche Arbeitsmaschine (1) nach einem der Ansprüche 7 bis 10,
**dadurch gekennzeichnet,**
**dass** die Einstellvorrichtung (7) dazu vorgesehen und eingerichtet ist, im digitalen Bild (21a) vorhandene überlappende Bildbereiche (53), insbesondere sich überlappende Umrandungspolygone (53), bezüglich der Fruchtstände (5) des Pflanzenbestandes (2) zu einem Bildbereiche (53), insbesondere zu einem Umrandungspolygon (53), zusammenzufügen.

12. Selbstfahrende landwirtschaftliche Arbeitsmaschine (1) nach einem der vorhergehenden Ansprüche,
**dadurch gekennzeichnet,**
**dass** die Einstellvorrichtung (7) dazu vorgesehen und eingerichtet ist, bei der Ermittlung des Anteils des vorhandenen Ernteguts (3) in einem Datensatz (42) hinterlegte Erntegutinformationen (43), Wetterinformationen (44), Standortinformationen (45), satellitenbasierten Informationen (52) und/oder Feldinformationen (46) einzubeziehen.

13. Selbstfahrende landwirtschaftliche Arbeitsmaschine (1) nach einem der vorhergehenden Ansprüche,
**dadurch gekennzeichnet,**
**dass** die Einstellvorrichtung (7) dazu vorgesehen und eingerichtet ist, und basierend auf diesem ermittelten Anteil des vorhandenen Ernteguts (3) wenigstens ein Arbeitsaggregat (8) und/oder die Fahrgeschwindigkeit der selbstfahrenden landwirtschaftlichen Arbeitsmaschine (1) derart einzustellen, dass ein vorgegebener Erntegutstrom durch die selbstfahrende landwirtschaftliche Arbeitsmaschine (1) eingestellt wird.

14. Selbstfahrende landwirtschaftliche Arbeitsmaschine (1) nach einem der vorhergehenden Ansprüche,
**dadurch gekennzeichnet,**
**dass** die Einstellvorrichtung (7) dazu vorgesehen und eingerichtet ist, und basierend auf diesem ermittelten Anteil des vorhandenen Ernteguts (3) wenigstens ein Arbeitsaggregat (8) und/oder die Fahrgeschwindigkeit der selbstfahrenden landwirtschaftlichen Arbeitsmaschine (1) derart einzustellen, dass ein Erntegutverlust durch die selbstfahrende landwirtschaftliche Arbeitsmaschine (1) minimiert wird.

15. Einstellungstechnische Verwendung eines digitalen Bildes (21a) eines Pflanzenbestandes (2) eines landwirtschaftlichen Feldes (35) einer Umgebung einer selbstfahrenden landwirtschaftlichen Arbeitsmaschine (1), insbesondere nach einem der vorhergehenden Ansprüche, zur Ermittlung eines Anteils an Erntegut (3) des Pflanzenbestandes (2) und zur Einstellung wenigstens eines Arbeitsaggregats (8) und/oder einer Fahrgeschwindigkeit der selbstfahrenden landwirtschaftlichen Arbeitsmaschine (1), insbesondere nach einem der vorhergehenden Ansprüche, in Abhängigkeit des ermittelten Anteils des Ernteguts (3) mittels einer Einstellvorrichtung (7) der selbstfahrenden landwirtschaftlichen Arbeitsmaschine (1), insbesondere nach einem der vorhergehenden Ansprüche, sodass ein Durchsatz eines Erntegutstroms durch die selbstfahrende landwirtschaftliche Arbeitsmaschine (1), insbesondere mit minimierten Erntegutverlusten, mittels einer Einstellung wenigstens eines Arbeitsaggregats (8) und/oder der Fahrgeschwindigkeit der selbstfahrenden landwirtschaftlichen Arbeitsmaschine (1), insbesondere nach einem der vorhergehenden Ansprüche, geregelt wird.
